# EUROPEAN PATENT APPLICATION

(11) **EP 1 249 983 A2**
(43) Date of publication of application: **16.10.2002**
(21) Application number: 02006294.9
(22) Date of filing: 20.03.2002
(51) Int. Cl.: H04L 29/06, H04L 12/22

(54) **Methods and arrangements for protecting information in forwarded authentication messages**

(30) Priority: 12.04.2001 US 834704
(71) Applicant: MICROSOFT CORPORATION, Redmond, Washington 98052-6399 (US)
(72) Inventor: Brezak, John E., Woodinville, WA 98072 (US); Ward, Richard B., Redmond, WA 98052 (US)
(74) Representative: Grünecker, Kinkeldey, Stockmair & Schwanhäusser Anwaltssozietät

(57) **Abstract**

Methods and arrangements are provided to selectively control access to the authentication information or portions thereof. The methods and arrangements are based on a scheme wherein the authentication information further includes specially encoded portions that can only be decoded by selected server-based services/processes. One method for use in protecting information in forwarded authentication messages includes encoding the selected data using an encryption key, then encoding the encryption key itself, using at least one other encryption key that only certain selected servers/services have access to, and then encapsulating the resulting encoded data and the encoded encryption key in an authentication message. This and other methods are particularly applicable to Kerberos and other like authentication arrangements.

## Description

### TECHNICAL FIELD

This invention relates generally to computer access control, and more particularly to methods and arrangements for selectively protecting information in forwarded authentication messages.

### BACKGROUND

Access control is paramount to computer security. To protect the integrity of computer systems and the confidentiality of important data, various access control schemes have been implemented to prevent unauthorized users and malicious attackers from gaining access to computer resources.

To ensure the comprehensiveness of computer security, access control is often implemented on various levels. For instance, on the level of one computer, a user is typically required to go through a logon procedure in which the computer determines whether the user is authorized to use the computer. In addition, on the level of a computer network, a user is commonly required to go through a user-authentication process for purposes of controlling the user's access to various network services. Even after a network access control server has authenticated the user, the user may still have to request a permit for a specific server in order to access that service. Various schemes based on different protocols, such as the Kerberos 5 protocol, have been proposed and implemented for controlling network access control by means of user authentication.

Generally, the user logon for a computer and the user authentication for network access control are two separate procedures. Nevertheless, to minimize the burden on a user in dealing with the different access control schemes, the user logon and the user authentication for network access are sometimes performed together. For example, in the case where the user authentication is implemented under the Kerberos protocol, when the user logs on the computer, the computer may also initiate a Kerberos authentication process. In the authentication process, the computer contacts a Kerberos Key Distribution Center (KDC) to first obtain a ticket-granting ticket (TGT) for the user. The computer can then use the TGT to obtain from the KDC, a session ticket for itself.

As networks have evolved, there has been a trend to have multiple tiers of server/service computers arranged to handle client computer requests. A simple example is a client computer making a request to a World Wide Web website via the Internet. Here, there may be a front-end web server that handles the formatting and associated business rules of the request, and a back-end server that manages a database for the website. For additional security, the web site may be configured such that an authentication protocol forwards (or delegates) credentials and/or possibly other information from the front-end server to the back-end server. This practice is becoming increasingly common in many websites.

It appears that this forwarding/delegating practice will expand in the near future to further include not only front-end and back-end websites, but also websites that provide an aggregated view of other websites. One example is a travel service site. Here, a client may be willing to allow the travel service site to forward a personal travel profile to air carriers, car rental companies, hotel chains, etc., but not to Bob's Pickpocket Service. Unfortunately, conventional authentication schemes do not allow for selective forwarding on the part of the client.

Consequently, there is a need for methods and arrangements that allow for selective forwarding on the part of the client, of information associated with client.

### SUMMARY

In accordance with certain aspects of the present invention, methods and arrangements are provided to selectively control access to the authentication information or portions thereof. The methods and arrangements are based on a scheme wherein the authentication information further includes specially encoded portions that can only be decoded by selected server-based services/processes. One method for use in protecting information in forwarded authentication messages includes encoding the selected data using an encryption key, then encoding the encryption key itself, using at least one other encryption key that only certain selected servers/services have access to, and then encapsulating the resulting encoded data and the encoded encryption key in an authentication message. This and other methods are particularly applicable to Kerberos and other like authentication arrangements.

Additional features and advantages of the invention will be made apparent from the following detailed description of illustrative embodiments, which proceeds with reference to the accompanying figures.

### BRIEF DESCRIPTION OF THE DRAWINGS

A more complete understanding of the various methods and arrangements of the present invention may be had by reference to the following detailed description when taken in conjunction with the accompanying drawings wherein:
Fig. 1 is a block diagram generally illustrating an exemplary computer system on which the present invention may be implemented.
Fig. 2 is a block diagram depicting an exemplary client-server environment.
Fig. 3 is an illustrative block diagram depicting an authentication message.
Figs 4-8 are block diagrams depicting exemplary Kerberos message exchanges.
Fig. 9 is an illustrative diagram depicting an exemplary improved authentication message in accordance with certain aspects of the present invention, and suitable for use in any of the configurations in Figs. 1-8.

### DETAILED DESCRIPTION

Turning to the drawings, wherein like reference numerals refer to like elements, the invention is illustrated as being implemented in a suitable computing environment. Although not required, the invention will be described in the general context of computer-executable instructions, such as program modules, being executed by a personal computer. Generally, program modules include routines, programs, objects, components, data structures, etc. that perform particular tasks or implement particular abstract data types. Moreover, those skilled in the art will appreciate that the invention may be practiced with other computer system configurations, including hand-held devices, multi-processor systems, microprocessor based or programmable consumer electronics, network PCs, minicomputers, mainframe computers, and the like. The invention may also be practiced in distributed computing environments where tasks are performed by remote processing devices that are linked through a communications network. In a distributed computing environment, program modules may be located in both local and remote memory storage devices.

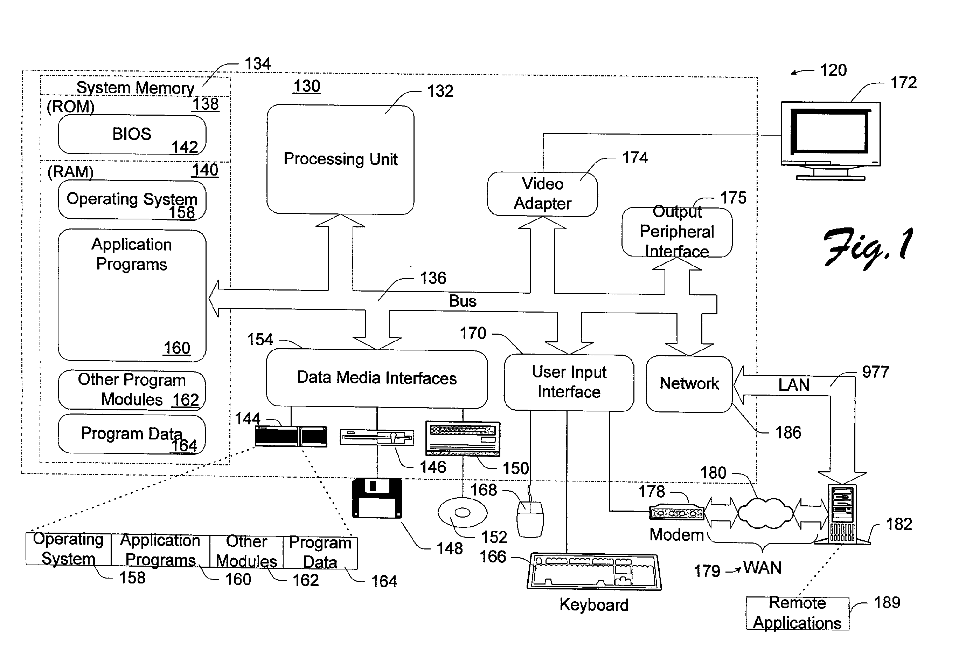

Fig.1 illustrates an example of a suitable computing environment 120 on which the subsequently described methods and arrangements may be implemented.

Exemplary computing environment 120 is only one example of a suitable computing environment and is not intended to suggest any limitation as to the scope of use or functionality of the improved methods and arrangements described herein. Neither should computing environment 120 be interpreted as having any dependency or requirement relating to any one or combination of components illustrated in computing environment 120.

The improved methods and arrangements herein are operational with numerous other general purpose or special purpose computing system environments or configurations. Examples of well known computing systems, environments, and/or configurations that may be suitable include, but are not limited to, personal computers, server computers, thin clients, thick clients, hand-held or laptop devices, multiprocessor systems, microprocessor-based systems, set top boxes, programmable consumer electronics, network PCs, minicomputers, mainframe computers, distributed computing environments that include any of the above systems or devices, and the like.

As shown in Fig. 1, computing environment 120 includes a general-purpose computing device in the form of a computer 130. The components of computer 130 may include one or more processors or processing units 132, a system memory 134, and a bus 136 that couples various system components including system memory 134 to processor 132.

Bus 136 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnects (PCI) bus also known as Mezzanine bus.

Computer 130 typically includes a variety of computer readable media. Such media may be any available media that is accessible by computer 130, and it includes both volatile and non-volatile media, removable and non-removable media.

In Fig. 1, system memory 134 includes computer readable media in the form of volatile memory, such as random access memory (RAM) 140, and/or non-volatile memory, such as read only memory (ROM) 138. A basic input/output system (BIOS) 142, containing the basic routines that help to transfer information between elements within computer 130, such as during start-up, is stored in ROM 138. RAM 140 typically contains data and/or program modules that are immediately accessible to and/or presently being operated on by processor 132.

Computer 130 may further include other removable/non-removable, volatile/non-volatile computer storage media. For example, Fig. 1 illustrates a hard disk drive 144 for reading from and writing to a non-removable, non-volatile magnetic media (not shown and typically called a "hard drive"), a magnetic disk drive 146 for reading from and writing to a removable, non-volatile magnetic disk 148 (e.g., a "floppy disk"), and an optical disk drive 150 for reading from or writing to a removable, non-volatile optical disk 152 such as a CD-ROM, CD-R, CD-RW, DVD-ROM, DVD-RAM or other optical media. Hard disk drive 144, magnetic disk drive 146 and optical disk drive 150 are each connected to bus 136 by one or more interfaces 154.

The drives and associated computer-readable media provide nonvolatile storage of computer readable instructions, data structures, program modules, and other data for computer 130. Although the exemplary environment described herein employs a hard disk, a removable magnetic disk 148 and a removable optical disk 152, it should be appreciated by those skilled in the art that other types of computer readable media which can store data that is accessible by a computer, such as magnetic cassettes, flash memory cards, digital video disks, random access memories (RAMs), read only memories (ROM), and the like, may also be used in the exemplary operating environment.

A number of program modules may be stored on the hard disk, magnetic disk 148, optical disk 152, ROM 138, or RAM 140, including, e.g., an operating system 158, one or more application programs 160, other program modules 162, and program data 164.

The improved methods and arrangements described herein may be implemented within operating system 158, one or more application programs 160, other program modules 162, and/or program data 164.

A user may provide commands and information into computer 130 through input devices such as keyboard 166 and pointing device 168 (such as a "mouse"). Other input devices (not shown) may include a microphone, joystick, game pad, satellite dish, serial port, scanner, camera, etc. These and other input devices are connected to the processing unit 132 through a user input interface 170 that is coupled to bus 136, but may be connected by other interface and bus structures, such as a parallel port, game port, or a universal serial bus (USB).

A monitor 172 or other type of display device is also connected to bus 136 via an interface, such as a video adapter 174. In addition to monitor 172, personal computers typically include other peripheral output devices (not shown), such as speakers and printers, which may be connected through output peripheral interface 175.

Computer 130 may operate in a networked environment using logical connections to one or more remote computers, such as a remote computer 182. Remote computer 182 may include many or all of the elements and features described herein relative to computer 130.

Logical connections shown in Fig. 1 are a local area network (LAN) 177 and a general wide area network (WAN) 179. Such networking environments are commonplace in offices, enterprise-wide computer networks, intranets, and the Internet.

When used in a LAN networking environment, computer 130 is connected to LAN 177 via network interface or adapter 186. When used in a WAN networking environment, the computer typically includes a modem 178 or other means for establishing communications over WAN 179. Modem 178, which may be internal or external, may be connected to system bus 136 via the user input interface 170 or other appropriate mechanism.

Depicted in Fig. 1, is a specific implementation of a WAN via the Internet. Here, computer 130 employs modem 178 to establish communications with at least one remote computer 182 via the Internet 180.

In a networked environment, program modules depicted relative to computer 130, or portions thereof, may be stored in a remote memory storage device. Thus, e.g., as depicted in Fig. 1, remote application programs 189 may reside on a memory device of remote computer 182. It will be appreciated that the network connections shown and described are exemplary and other means of establishing a communications link between the computers may be used.

This description will now focus on certain aspects of the present invention associated with protecting information in forwarded authentication messages. While the following description focuses on exemplary Kerberos-based systems and improvements there to, the various methods and arrangements of the present invention are also clearly applicable to other authentication systems and techniques.

In certain exemplary systems, the Kerberos protocol is implemented as a Security Service Provider (SSP) that is accessible via a Security Support Provider Interface (SSPI). In this manner, applications can directly access authentication protocol services through SSPI. Those skilled in the art will recognize that other services/systems may be used, such as, for example, an attribute-based system, SSL, etc.

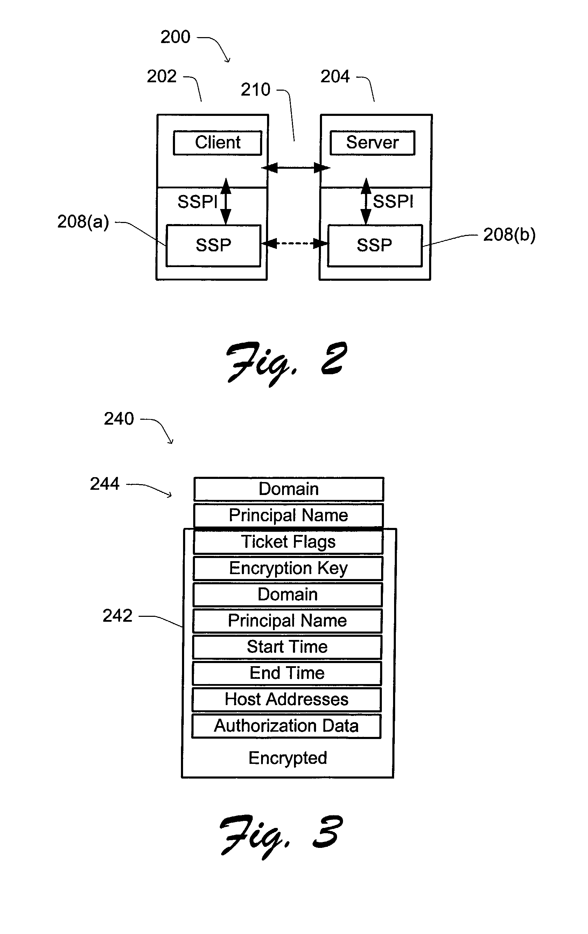

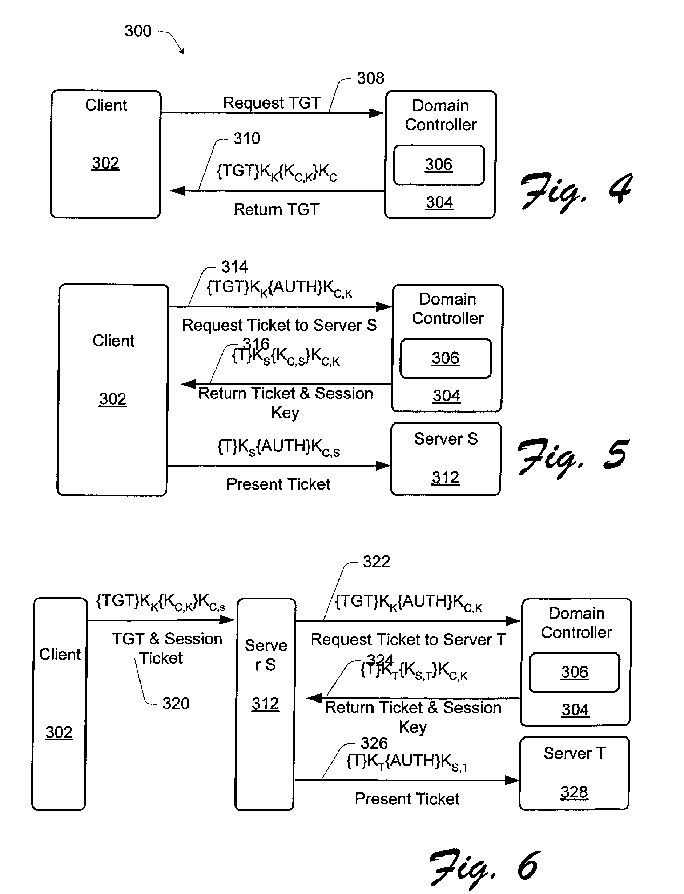

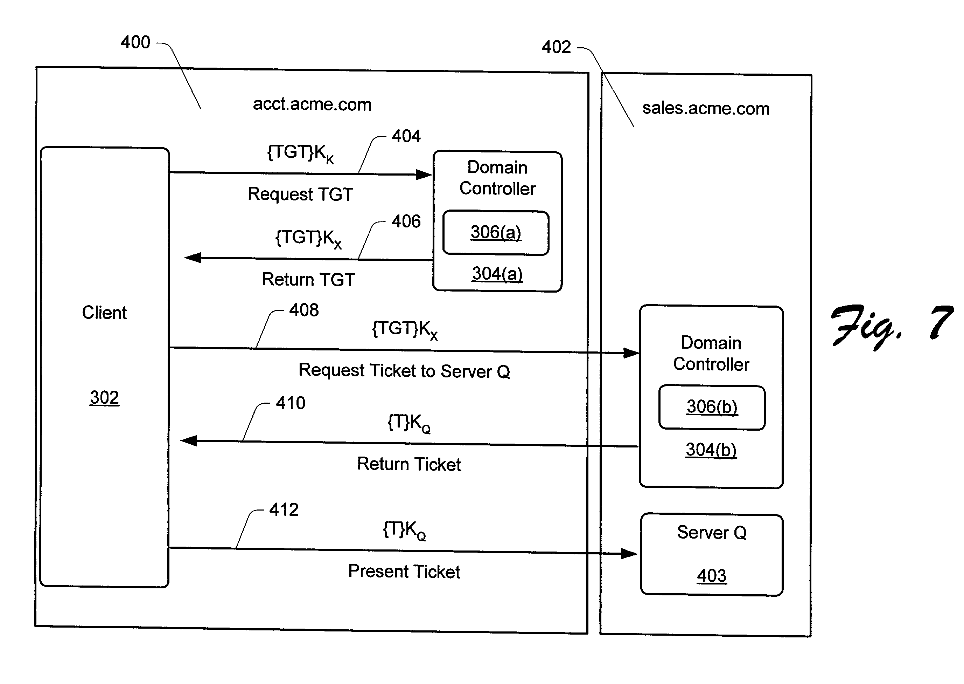

For example, Fig. 2 shows how applications or other programs may use selected security interfaces, for example, SSPIs. Here, an exemplary system 200 is depicted as having a client machine 202 and server machine 204. Client machine 202 is operatively coupled to SSP 208(a). Server machine 204 is operatively coupled to SSP 208(b). In certain exemplary configurations, SSP 208a-b may include Kerberos related SSPI services, or the like.

In this example, the SSP 208(a-b) provides three security services, namely, authentication, data integrity and data privacy. The authentication protocol uses encryption to provide each of these services. Here, the operating system can provide public key and/or secret key encryption. Preferably, the authentication protocol will rely mostly on secret key encryption (also called private key, symmetric, single key, or shared secret encryption).

Rather than require its users (known as principals) to invent special encryption keys, the authentication protocol may, for example, just use ordinary passwords. But those passwords aren't used to encrypt the actual data sent between client 202 and server 204. Instead, password-based keys are used only during login and other dynamically created keys are used to encrypt and decrypt data sent across the network 210.

To be more precise, the key a principal uses to log in is really a hash of that principal's password. A hash algorithm (sometimes called a message digest or a checksum) produces a bit string that is a function of the information being hashed, but that can't be used to recover the original input value. In other words, hashes are one-way. Therefore, given a hashed password value, it is very nearly impossible to recover the original password.

In certain authentication protocol supporting networks, users have passwords, server applications that want to authenticate their users have passwords, and all computers in a domain have passwords. Thus, any entity with a password qualifies as a security principal.

One exemplary authentication protocol server itself, known as the Key Distribution Center (KDC), runs on a domain controller where it has access to the hashed password for every principal in its domain. This information is stored in a directory associated with each principal, also kept on the domain controller. Usually by default, the clear text password itself is not stored in the directory only a hashed version is kept there.

The authentication protocol allows negotiation of the encryption algorithm. Most authentication protocol implementations default to a Data Encryption Standard (DES) or the like, for example, wherein the keys have an effective length of 56 bits. Some operating systems allow the authentication protocol to utilize a stronger RC4 encryption algorithm.

That secret key encryption is used to send data privately is obvious, but it's less than obvious how principles can use it for authentication, the authentication protocol's most important function. To understand how this might be done, imagine that two principles share a secret key with one another, and suppose the first principle sends a message encrypted using that key. If the second principle uses this key to decrypt the message, and that decryption works correctly, then this message must have been encrypted using that same key. If only the two principles know that key, then this message must have come from the first principle. Thus, by proving knowledge of a key in this way, the first principle can be authenticated.

But this simple method is not very practical. Each set of principles (e.g., client/server pair) would have to share a secret key, which means that a separate password for every service the client wanted to access securely. This is not a very appealing prospect.

In accord with the exemplary authentication protocol, when a user wants to prove their identity to a server application on some other system that user must somehow provide the server with an appropriate ticket. Each ticket allows a specific user to prove their identity to a specific server application, such as a particular DCOM 206 application.

As graphically illustrated in Fig. 3, an authentication protocol ticket 240 contains both encrypted information 242 and unencrypted information 244. The unencrypted part 244 of ticket 240, in this example, includes two primary pieces of information: the name of the operating system "realm" or "domain", and the name of the principal that the ticket identifies.

The encrypted part 242 of ticket 240 contains quite a bit more information. In this example, the encrypted fields may include various flags, an encryption key (commonly referred to as a session key) to be used later on, encrypted copies of the user's principal name and domain, start and end times for this ticket's validity, one or more IP addresses identifying the user's system, and the user's authorization data, typically used by the server to determine what this user is allowed to access.

All of these fields are encrypted using the key of the server application this ticket targets. Neither the user nor any attackers listening on the network can read or modify the encrypted fields in a ticket, since they don't know the server password used for encryption.

When a user wants to prove their identity to a server, they must acquire a ticket to that server. In fact, virtually the entire exemplary authentication protocol is devoted to acquiring and using tickets.

Before launching into a basic description of how the protocol works, it's worth taking a moment to further explain the notation used below. Here, the remaining text uses the following notation: K_{X} is the secret key (that is, the hashed password) of X, K_{C} is the secret key of a client (_{C}) user, K_{S} is the secret key of a server (_{S}) application, and K_{K} is the secret key of a KDC (_{K}). Additionally, for example, {anything}K_{X} defines the "anything" as being encrypted with X's secret key (i.e., K_{X}). Further let {T}K_{S} be a ticket encrypted with server S's secret key (i.e., K_{S}). In other words, this is a ticket for server S (the notation is a bit imprecise, since the entire ticket isn't encrypted). Let, K_{X,Y} be a session key used between X and Y. Also, let {anything}K_{X,Y} be "anything" encrypted with the session key used between X and Y.

The first time a user requests a ticket is when that user logs in to some account in an operating system domain, for example. From the point of view of the user, the process is simple: type a login name, a domain name, and a password into some client machine, then wait for the login to succeed or fail.

As shown in arrangement 300 in Fig. 4, the user's login request causes the client system 302 to send a message 308 to a KDC 306 running on a domain controller 304. The message 308 contains several things, including the user's name; preauthentication data, which consists of a timestamp encrypted using K_{C}, a hash of the user's password, as a key; and a request for a ticket-granting ticket (TGT). The resulting TGT 310 is just an ordinary ticket, like the one shown in Fig. 3, and as with all tickets, it is used to prove a user's identity. However, TGT 310 is used in a slightly special way in that the SSP on the client 302 presents it to the KDC 306 when requesting tickets to specific server applications.

When request TGT message 308 arrives at domain controller 304, KDC 306 looks up the entry associated with the user's principal name in the specified domain's directory database (not shown). From this entry, KDC 306 extracts a hash of the user's password, and then uses this value to decrypt the preauthentication data. If that decryption works and results in a very recent timestamp, then KDC 306 can be certain that this user is who they claim to be, since the user has demonstrated knowledge of the correct password. Note that this was done without having that password sent over the network. To provide its services, the exemplary authentication protocol never requires sending a user's password across the network. If the decryption fails, the user must have entered the wrong password, and the login will fail.

If the preauthentication data is correctly validated, KDC 306 next builds and sends back to client machine 302 what it asked for, namely, a ticket granting ticket (TGT) via message 310. Like all tickets, this one contains the user's name and the name of the domain in which it was issued, along with a session key (K_{C,K}, generated randomly by the KDC 306), the valid start and end times for this ticket, and various flag values. Finally, in an Authorization Data field, the TGT contains privileges and Security Identifiers (SIDs), or the like; essentially identifying this user and the groups the user belongs to (e.g., these may be extracted from the user's entry in a directory). As before, part of the ticket is encrypted using the key of the server to which this ticket will be sent. Since the TGT is used only to request other tickets, and since only the KDC can give out tickets, the encrypted part of the TGT is encrypted using K_{K}, the key of the KDC itself.

Along with the TGT, the KDC also sends back to the client machine the session key K_{C,K}, the same value the server placed in the TGT. This session key is sent encrypted using the user's hashed password as a key. When the client system gets message 310, it uses the hash of whatever password the user has entered to decrypt the received session key. In certain implementations of the exemplary authentication protocol, this decryption will always work, since only users who demonstrate knowledge of the correct password via the preauthentication data will get message 310 sent to them at all. Sending preauthentication data is optional in the authentication protocol standard.

Once a user/client has successfully logged in, they will likely begin accessing services running on other computers in the network. To do this securely, the user must at a minimum have some way of proving their identity to those services. As shown in Fig. 5, the SSP can be used to present a TGT to the KDC, requesting a ticket to a specific service. Here, via message 314, client machine 302 is requesting a ticket for server machine S (312). To distinguish them from TGTs, these tickets are sometimes called service tickets, but the format is identical for both types. That ticket is then sent to the target service (via message 306), which can use it to determine exactly who this user is. In fact, immediately after acquiring a TGT, most clients typically complete the login process by requesting a service ticket for its own computer, allowing it to prove its identity to local services.

When a user wants to access a DCOM server application (called, for example, Server S) running on some remote system 312, the user will load the client part of the application, and this client will attempt to create a remote DCOM object (not shown). If the application uses the authentication protocol for authentication, that client application will need to acquire a ticket on behalf of its user before it can access the server. Recall that each ticket authenticates a particular user to a particular service, and since the client part of a distributed application runs on behalf of the user, that client acquires tickets that prove the user's identity to the server.

When the client application makes its first remote request to the server, a ticket request message 308 is automatically made to KDC 306, as shown in Fig. 5. Although not shown, ticket request message 308 contains several things, including the user's TGT, the name of the server application for which a service ticket is requested (which in this case is Server S), and an authenticator proving that this TGT belongs to this user. The authenticator may include, for example, the current time and the user's name, and is encrypted using the session key K_{C,K} that was received at login.

When KDC 306 receives ticket request message 308, it decrypts the TGT (recall that only the KDC knows K_{K}, the key used to encrypt this ticket), then extracts the session key K_{C,K} from the ticket. KDC 306 then uses this session key to decrypt the authenticator. The authenticator serves two purposes. First, because it is encrypted using the client/authentication protocol session key, it proves that the user is who they claim to be, since as described earlier, the only way to get this session key is to type the correct password at login. If the KDC's attempted decryption of the authenticator is successful, client 302 must be in possession of the session key.

Secondly, because the authenticator contains a timestamp, it significantly prevents an attacker from grabbing a user's TGT off the network, then presenting it as its own. A new authenticator is created each time a ticket is used, and because the timestamp is encrypted using the session key, known only to client 302 and KDC 306, a valid authenticator cannot be created by anyone else.

To prevent resending authenticators, KDC 306 will reject any authenticator whose timestamp is too old. By default, for example, in certain systems an authenticator's timestamp must differ by no more than 5 minutes from that of the server that receives it. This implies that the clocks on machines using the authentication protocol must be at least loosely synchronized. Thus, for example, an IETF-defined Simple Network Time Protocol (SNTP) or the like may be used for clock synchronization. To further ensure that the user isn't presenting a stolen ticket, KDC 306 may also verify that the IP address in the TGT matches the IP address of the system that sent this ticket request message 308.

If everything checks out, KDC 306 will believe that this user is who they claim to be, and will send back the requested service ticket through message 310. KDC 306 copies some fields from the TGT into the new service ticket, including, for example, the user's name, domain, and authorization data. It sets the service ticket's flags and start/end times appropriately, and generates a new random session key, K_{C,S}, which it places in the ticket. As described later, this key can be used to encrypt information sent between client machine 302 and Server S 312. KDC 306 then encrypts this new ticket using K_{S}, Server S's secret key, and sends it back to client machine 302, along with the new session key K_{C,S}. To prevent attackers from learning this new key, it can, for example, be sent encrypted using the session key shared by the authentication protocol and the client.

Finally, the goal of this entire exercise can be achieved as the user proves their identity to the server application. On its first request to Server S 312, client 302 presents the service ticket it just received along with an authenticator encrypted using K_{C,S}. This is shown in message 318. This information is sent as part of whatever protocol is being used between client and server. With DCOM, for example, the ticket and authenticator may be carried in a particular field in the appropriate DCOM packet. The receiving system decrypts the ticket with its secret key, extracts the session key K_{C,S} from the ticket, then decrypts and validates the authenticator. If everything checks out, the user's identity information is extracted from the ticket―e.g., principal name, domain name, and authorization data―and made accessible to the server application. The SSP usually does most if not all of this work.

Although the authentication protocol itself does not directly address the problem, the information about the user that is extracted from the received ticket can eventually be used to make an authorization decision. Exactly how this is done is up to the creator of the server application. It might look up the user's name in a list of users authorized to perform some function (e.g., read or write), or it might use the authorization data to impersonate the user (e.g. proxy), for example. In this second case, the Local Security Authority (LSA) on the server's machine can, for example, construct a security access token using the user's authorization data. Once this is completed, the server process may use this token to impersonate the user and try to access whatever resource the user is interested in.

Thus, how an authorization decision is made is usually not within the authentication protocol's purview, but the exemplary authentication protocol does guarantee that the identity the user is claiming in this service ticket truly identifies that user.

To summarize, since the service ticket the user presented was encrypted using Server S's secret key, and since only KDC 306 (along with Server S, of course) knows that key, this ticket must have been created by the KDC. Since KDC 306 will only give out service tickets to users who can prove they know the right password by correctly encrypting the preauthentication data, this user must be who they claim to be. When presented with valid authenticators, the tickets that are used by the authentication protocol to provide reliable authentication of clients.

It might be possible for an attacker to install a spurious version of Server S, then acquire sensitive information by fooling client 302 into thinking it was the real Server S 312. To prevent this, the exemplary authentication protocol standard defines an option for mutual authentication, an option that should be requested by most applications. Not only does the client user prove its identity to the server, but the server must also prove its identity to the client.

To do this, the SSP on the server creates a message containing the timestamp from the client's authenticator encrypted using the client/Server S session key, K_{C,S}. When the SSP on the client receives this message, it can then use its copy of the session key to decrypt it. If the client's SSP finds the timestamp it just sent, it can be further certain that the server knows the session key, too. Since learning the session key required decrypting the server's ticket, which required knowing the server's password, then this server must be who it claims to be.

All of the complexity described so far has focused on how the authentication protocol provides just one security service, namely authentication. But the exemplary authentication protocol can also provide data integrity and data privacy, two other useful services. Because the exchanges just described have left the client and server in possession of a shared session key, providing these additional services is straightforward.

For example, to prevent an attacker from modifying transmitted data without being detected, the SSP on any system that's sending data can compute a checksum on each packet it sends and transmit that checksum with the packet. The checksum value is a function of the data it's based on, so if the data is changed, the checksum must also change. But sending just a packet and a checksum isn't always sufficient since an attacker could grab the packet, modify the data, recompute a new checksum on the new data, and send it on its way.

To prevent this from happening, the data's sender may compute the checksum on not just the message itself, but on the message and other information, then encrypts the result using the session key. By default, the checksum algorithm used in certain exemplary authentication protocol arrangements is termed HMAC (Hash-based Message Authentication Code), and the checksum is encrypted using RC4 or the like. An attacker will be unable to create a valid checksum for modified data, since they do not know the key. The result is that the receiver of a packet can always detect any attempt to modify the contents of that packet.

Providing the last service, data privacy, is simple. Since the client and server share a session key, the SSP on each one just uses this key to encrypt data it sends to the other. Note that data privacy implies data integrity, since no attacker can modify encrypted data in transit on the network without those changes being detected.

In this manner, the exemplary authentication protocol provides the fundamental security services required for a distributed environment: authentication, data integrity, and data privacy. The authentication protocol may also be configured to support delegation.

In the example described earlier, suppose the user has already been authenticated to Server S 312. Server S 312 can now impersonate the user and attempt to access something on its local system, such as a file. In this case, the access checking built into the operating system (or like program) will grant or deny the access based on the file's access control list (ACL) or like mechanism. All of this works naturally if the resource being accessed is on the same machine as the server.

Suppose, however, that to carry out whatever task the user is requesting, Server S must make a request to another server, e.g., Server T 328, running on another machine (see Fig. 6). Even though Server T's direct user will be Server S 312, access is being requested on behalf of the original user (i.e., client 302), not Server S 312. For this to work correctly, the user needs some way to pass its identity to Server S, allowing Server S to make further remote requests on its behalf.

The exemplary authentication protocol supports this concept through delegation, as shown in Fig. 6. If a client application requests it, a user's TGT and its associated session key can be passed to another server, such as Server S. Sending just the TGT wouldn't be enough, since the associated session key is required to construct the authenticators sent along with the TGT when new tickets are requested. Like all tickets, the TGT is encrypted, but to ensure that attackers can't steal the TGT's associated session key off the wire when it's passed from client to server, that key is sent encrypted using the session key the client shares with Server S.

The TGT passed by client 302 to Server S 312 must have the FORWARDABLE flag set in its Flags field. If it does, Server S can present this TGT to a KDC and request tickets to other services even though the IP address in this TGT won't match Server S's IP address―the FORWARDABLE flag tells the KDC that it's okay to ignore this discrepancy. Also, in certain implementations client 302 can only send its TGT and associated session key to a server if that server's account is marked as trusted for delegation in this domain.

To see how this all works, suppose client 302 passes its TGT and associated session key to Server S 312 via message 320 with the FORWARDABLE flag set. If Server S 312 needs to access Server T 328 on the client user's behalf, it can present this TGT along with a valid authenticator to KDC 306 via message 322, requesting a new ticket for Server T 328. This new ticket will contain the user's identity, just like the original ticket, but will be encrypted using Server T's password (see message 324). When Server S 312 presents this new ticket to Server T 328 via message 326, again with a valid authenticator, Server T 328 will behave as though it is receiving a request directly from client 302.

Kerberos also allows authentication between clients and servers in different domains, although the process is a bit more complex than that described so far. To authenticate itself to any server application, no matter what domain that server is in, a user must acquire a ticket to that server. But only a KDC 306 in the same domain as the target server can issue that ticket, since only it knows that server's password. If a user wants to be authenticated to a server in a different domain, then they must request a ticket to that server from a KDC in the foreign domain. As is always the case, requesting a ticket from a KDC requires presenting a TGT to that server. Thus, the fundamental problem is for the user to acquire a TGT to the KDC in the foreign domain. Once the user has this, they can request and use a ticket to the target server in the normal way.

For this to be possible, the two domains must have a trust relationship between them. When a trust relationship is created between two domains, a password is also created that is known only to those two domains. This shared password can be used to encrypt a ticket that's passed between the two domains.

Fig. 7 shows how the process works (and although they have been omitted from the diagram for simplicity, authenticators and session keys are still used as described earlier). Suppose a user in the acct.acme.com domain 400 wants to access Server Q 403 in the sales.acme.com domain 402. The Kerberos SSP on the client system 302 begins by presenting, via message 404, the user's TGT to the domain controller 304(a) (and KDC 306(a) therein) within the user's own acct.acme.com domain 400, requesting a TGT to the KDC 306(b) in domain controller 304(b) of sales.acme.com domain 402. KDC 306(a) responds in message 406 by sending back a TGT that client 302 can use to request tickets from the KDC 306(b) in the sales.acme.com domain 402. This ticket is not encrypted using the password of this domain's KDC 306(b), as it normally would be. Instead, it's encrypted using the password shared between acct.acme.com domain 400 and sales.acme.com domain 402, designated K_{X} in Fig. 7.

Once it has this TGT, the client's SSP then presents it to KDC 306(b) in sales.acme.com domain 402, requesting a ticket for Server Q 403 (as represented by message 408). KDC 306(b) then decrypts the TGT presented by client 302 using K_{X}, the password it shares with acct.acme.com's KDC 306(a). If the TGT is valid, then KDC 306(b) looks up Server Q's password in its directory database and uses it to build a ticket for Server Q. It then sends this ticket back to the client 302 via message 410, which can subsequently present it to Server Q 403 as shown by message 412.

Despite the apparent complexity of Fig. 7, the mechanics of using the authentication protocol between domains are simple. All that's required is adding the single extra step of getting a TGT for a foreign domain's KDC. But think about what the KDC in sales.acme.com is implicitly assuming in this example: it's trusting the KDC in acct.acme.com not to give out TGTs to it without first validating the user's identity. In other words, by accepting a TGT encrypted with the key it shares with acct.acme.com, sales.acme.com's KDC is trusting the KDC in acct.acme.com to behave correctly. For cross-domain authentication to work, the two domains involved must trust each other.

The exemplary authentication protocol also supports transitive trust, in which if one domain trusts a second domain, and if that second domain trusts a third domain, then there is automatically a trust relationship between the first domain and the third domain. Transitive trust ensures that domains only need to share a password with the domains immediately above and below them in the domain hierarchy―the authentication protocol takes care of the rest.

It is further relevant to this description to note that the authorization portion of a ticket may optionally include an optimization data field suitable for passing application specific data. Here, for example, Windows® client-server software available from Microsoft ® Corporation of Redmond, Washington, takes advantage of this optional field by providing additional data about the client/user.

As networks grow in size and complexity, users will be provided with ever-greater services and tools. For example, e-commerce on the World Wide Web continues to grow and expand. Consumers are able to shop for and purchase goods and services directly from their providers, or from third parties. One recent move has been to provide one-stop shopping websites or portals through which consumers conduct most if not all of their on-line business.

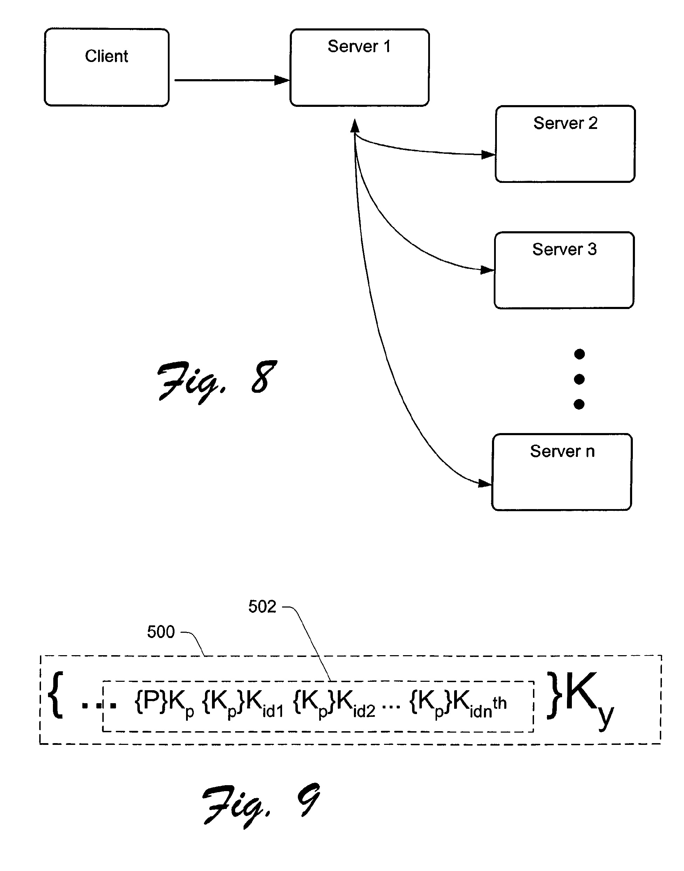

These websites and others tend to use a hierarchical server structure that includes at least one front-end service and at least one back-end service, for example. Moreover, since many of these services/servers are interested in the user (e.g., a potential or actual customer) it is not uncommon for the authorization data portion of a ticket (see, e.g., Fig. 3) to include privileged client information of interest to different parties. For example, a Privilege Attribute Certificate (PAC) or the like may be included within the authorization data portion of a ticket to further streamline the client-server environment. In a multiple server arrangement a front-end server may forward the ticket on through to a subsequent service/server, as shown in Fig 8.

In this example, the first server may be directed to forward a ticket to one of the other servers. In certain systems, to access more than one server, the client will need additional tickets. In other systems, "server 1" would decrypt the ticket and then duplicate and pass on the user information to one or more of the other servers. These techniques and others like them tend to consume significant amounts bandwidth, memory and processing resources. This is especially true for aggregated service websites on the Internet. Moreover, the user may not have meant to authorize the duplication and/or release of their privileged information to so many entities.

One example of an aggregated service website is an Acme Travel Company website, which accepts user inputs about travel plans and then attempts to match the user to prospective goods/service providers, such as, airlines, railways, hotels, rental car agencies, etc. Here, in the past, let us assume that the Acme server would decrypt the ticket and then possibly provide duplicates of the PAC or other portion of the ticket to a United Airlines server, an American Airlines server, and a Not-So-Good Airline server. While the user may be willing to fly on United Airlines or on American Airlines, they may not want to fly on Not-So-Good Airline, nor may they want to have their privileged information provided to Not-So-Good Airlines.

Unfortunately, the client is at the mercy of the decrypting server to enforce certain policies since the existing authentication schemes do not allow for selective forwarding on the part of the client.

Having recognized this problem and anticipating the future trends in website businesses and arrangements, in accordance with certain aspects of the present invention, the client is provided with the means to selectively control who is allowed to access privileged and other profile information within a ticket or like security token. As described below, it should be recognized that authorization data may be provided and later used via the ticket and/or an authenticator (e.g., through an optional field). The various methods and arrangements allow for information, such as the profile, to be encoded in such a way that only a subset of parties (e.g., servers/services) can access the data, regardless as to where the information may be forwarded.

More specifically, for example, let P be the profile or other information supplied by the client within the ticket. The client constructs a ticket with P being encrypted with a randomly generated key, Kₚ. This is noted by {P)Kₚ, which includes a single encryption of the P information. The client then, either independently or with the assistance of a public, or other trusted third party authority, appends {Kₚ, nonce}K_{id1}, {Kₚ, nonce}K_{id2,} ..., {Kₚ, nonce}K_{idn}th to {P}Kₚ, and supplies it to the intermediary servers/services. Where now, no matter who obtains the forwarded ticket, they cannot decrypt P without having an appropriate key K_{idx} (wherein x is 1, ..., n) required to obtain key Kₚ. Note that the nonce data may be optional, depending upon the implementation.

Note that key K_{idx} can be assigned to a specific group(s) or an individual, for example. In certain cases, such an assignment may minimize the amount of data that is to be stored, processed or transmitted. A third party authority can supply value by providing interesting grouping of these end services, and handle the registration and updates of any keys.

Fig. 9 illustrates a modified portion of an exemplary ticket 500 further having at least one encrypted client information portion 502 within the authorization data field. Here, for example, the encrypted client information portion 502 includes privileged user information P that is encrypted with key Kₚ. As can be seen, a server/service with access to K_{id1} may decrypt {P}Kₚ by first decrypting Kₚ using K_{id1}. Likewise, a server/service with access to K_{id2} may decrypt {P}Kₚ by first decrypting Kₚ using K_{id2}. Any number of such embedded key arrangements may be realized.

Thus, in the example above, the user may specifically/intentionally leave out an encrypted key for Not-So-Good Airlines while including one or more associated with United Airlines and American Airlines. Any arbitrary grouping may also be applied by selectively controlling the keys and the addition of the encrypted keys to the modified ticket 500.

Those skilled in the art will recognize that these improved methods and arrangements may, for example, be implemented using the above-described exemplary authentication protocol (e.g., Kerberos), or other authentication protocol(s). Thus, although some preferred embodiments of the various methods and arrangements of the present invention have been illustrated in the accompanying Drawings and described in the foregoing Detailed Description, it will be understood that the invention is not limited to the exemplary embodiments disclosed, but is capable of numerous rearrangements, modifications and substitutions without departing from the spirit of the invention as set forth and defined by the following claims.

## Claims

1. A method for use in protecting information in forwarded authentication messages, the method comprising:
encoding data using an encryption key;
encoding the encryption key using at least one other encryption key; and
encapsulating the resulting encoded data and the encoded encryption key in a forwarded authentication message.

2. The method as recited in Claim 1, further comprising encoding the encryption key a plurality of times using a plurality of other encryption keys, and further encapsulating the resulting encoded encryption keys in the authentication message.

3. The method as recited in Claim 1, wherein the authentication message includes a Kerberos ticket.

4. The method as recited in Claim 3, wherein the data includes authorization data within the Kerberos ticket.

5. The method as recited in Claim 1, further comprising:
providing the authentication message to a service;
providing the at least one other encryption key to the service;
causing the service to decode the encoded encryption key using the at least one other encryption key; and
causing the service to decode the encoded data using the resulting decoded encryption key.

6. A computer-readable medium for use in protecting information in forwarded authentication messages, the computer-readable medium having computer-executable instructions for performing acts comprising:
using an encryption key to encode data;
using at least one other encryption key to encode the encryption key;
including the resulting encoded data in at least one authentication message; and
including the encoded encryption key in at least one authentication message.

7. The computer-readable medium as recited in Claim 6, wherein including the resulting encoded data in at least one authentication message and including the encoded encryption key in at least one authentication message, cause the resulting encoded data and the encoded encryption key to be included in the same authentication message.

8. The computer-readable medium as recited in Claim 6, further comprising computer-executable instructions for encoding the encryption key a plurality of times using a plurality of other encryption keys, and further encapsulating the resulting encoded encryption keys in at least one authentication message.

9. The computer-readable medium as recited in Claim 6, wherein the authentication message includes a Kerberos ticket.

10. The computer-readable medium as recited in Claim 9, wherein the data includes authorization data within the Kerberos ticket.

11. The computer-readable medium as recited in Claim 6, further comprising computer-executable instructions for:
providing the authentication message to a service;
providing the at least one other encryption key to the service;
causing the service to decode the encoded encryption key using the at least one other encryption key; and
causing the service to decode the encoded data using the resulting decoded encryption key.

12. An apparatus for use in protecting information in forwarded authentication messages, the apparatus comprising logic configured to encode data using an encryption key, encode the encryption key using at least one other encryption key, and encapsulate the resulting encoded data and the encoded encryption key in an authentication message.

13. The apparatus as recited in Claim 12, wherein the logic is further configured to encode the encryption key a plurality of times using a plurality of other encryption keys, and further encapsulate the resulting encoded encryption keys in the authentication message.

14. The apparatus as recited in Claim 12, wherein the authentication message includes a Kerberos ticket.

15. The apparatus as recited in Claim 14, wherein the data includes authorization data within the Kerberos ticket.

16. The apparatus as recited in Claim 12, further comprising a least one service operatively coupled to receive the authentication message from the logic, and configured to decode the encoded encryption key using the at least one other encryption key and decode the encoded data using the resulting decoded encryption key.

17. A computer-readable medium having stored thereon an authentication message, comprising:
encoded data; and
at least one encoded encryption key operatively associated with at least a portion of the encoded data.
